# EUROPÄISCHE PATENTSCHRIFT

(11) **EP 3 481 612 B1**
(45) Veröffentlichungstag und Bekanntmachung des Hinweises auf die Patenterteilung: **27.01.2021**
(21) Anmeldenummer: 17746064.9
(22) Anmeldetag: 27.07.2017
(51) Int. Cl.: B29B 9/06, B29B 9/12, B29B 9/16, B29C 48/405, B29B 7/60, B29B 7/88, B29C 48/00, B29C 48/04

(54) **VORRICHTUNG UND VERFAHREN ZUR HERSTELLUNG EINES GEFÄRBTEN UND EINES UNGEFÄRBTEN KUNSTSTOFFGRANULATES**
DEVICE AND METHOD FOR PRODUCING A COLOURED AND A NON-COLOURED POLYMERIC GRANULATE
DISPOSITIF ET PROCÉDÉ DE FABRICATION D'UN GRANULAT POLYMÉRIQUE COLORÉ ET NON-COLORÉ

(30) Priorität: 17.08.2016 EP 16184551
(43) Veröffentlichungstag der Anmeldung: 15.05.2019
(73) Patentinhaber: Coperion GmbH, 70469 Stuttgart (DE)
(72) Erfinder: CONRAD, Ulrich, 31008 Elze (DE); KERN, Norbert, 71732 Tamm (DE); SCHMUDDE, Markus, 71711 Steinheim a.d. Murr (DE); STÖHRER, Bernhard, 74385 Pleidelsheim (DE); HORNBERGER, Heiko, 74394 Hessigheim (DE)
(74) Vertreter: Rau, Schneck & Hübner Patentanwälte Rechtsanwälte PartGmbB
(86) Internationale Anmeldenummer: PCT/EP2017/068949
(87) Internationale Veröffentlichungsnummer: WO 2018/033355

(56) Entgegenhaltungen:
- DE-A1- 10 230 321
- DE-A1-102004 002 401
- DE-A1-102014 110 337
- DE-U1-202013 001 692
- US-A- 5 895 617
- US-A1- 2008 093 763
- US-A1- 2009 134 537
- US-A1- 2013 228 308
- US-A1- 2016 075 053

## Beschreibung

Die Erfindung betrifft eine Vorrichtung und ein Verfahren zur Herstellung von Kunststoff-Granulat.

Aus der DE 10 2004 002 401 A1 ist eine Vorrichtung und ein Verfahren zur Herstellung von Kunststoff-Granulat mittels einer Schneckenmaschine und einer Unterwasser-Granuliereinrichtung bekannt. Eine derartige Vorrichtung wird entweder ausschließlich zur Herstellung von gefärbtem Kunststoff-Granulat oder ausschließlich zur Herstellung von ungefärbtem, also naturfarbenem Kunststoff-Granulat verwendet. Eine wahlweise Herstellung von gefärbtem und ungefärbtem Kunststoff-Granulat ist mit einer derartigen Vorrichtung nicht möglich, da gefärbtes Kunststoff-Granulat das ungefärbte Kunststoff-Granulat kontaminieren würde und das ungefärbte Kunststoff-Granulat nicht mehr als solches zu verkaufen wäre.

Aus der US 2016/0075053 A1 ist ein Granuliersystem mit einem Extruder und einer Unterwassergranuliervorrichtung bekannt. Das Granulat wird mittels einer Abscheideeinrichtung von dem Granulierwasser abgetrennt und das Granulierwasser wieder der Unterwassergranuliervorrichtung zugeführt. Das Granulat wird anschließend über ein Verteilerventil mehreren Trocknern zugeführt.

Der Erfindung liegt die Aufgabe zugrunde, eine Vorrichtung zu schaffen, die in einfacher, flexibler und wirtschaftlicher Weise die wahlweise Herstellung von gefärbtem und ungefärbtem Kunststoff-Granulat ermöglicht.

Diese Aufgabe wird durch eine Vorrichtung mit den Merkmalen des Anspruchs 1 gelöst. Erfindungsgemäß wurde erkannt, dass die Mehrwellen-Schneckenmaschine und die Unterwasser-Granuliereinrichtung eine ausreichende Selbstreinigung aufweisen, jedoch die der Unterwasser-Granuliereinrichtung nachgeordnete Nachbehandlung des Kunststoff-Granulats getrennt werden muss, um eine Kontamination von ungefärbtem Kunststoff-Granulat durch gefärbtes Kunststoff-Granulat zu vermeiden. Durch die der Unterwasser-Granuliereinrichtung nachgeordnete Granulatwechseleinheit ist eine Trennung der Nachbehandlung in einen ersten Nachbehandlungskreis für das gefärbte Kunststoff-Granulat und einen zweiten Nachbehandlungskreis für das ungefärbte Kunststoff-Granulat, also das naturfarbene Kunststoff-Granulat möglich. Die Granulatwechseleinheit ist beispielsweise derart ausgebildet, dass eine Austragsleitung der Unterwasser-Granuliereinrichtung manuell und/oder automatisch wahlweise mit einer ersten Förderleitung des ersten Nachbehandlungskreises oder einer zweiten Förderleitung des zweiten Nachbehandlungskreises verbindbar ist. Vorzugsweise ist die Granulatwechseleinheit als Granulatweiche ausgebildet. Der Granulatwechseleinheit ist dementsprechend eine erste Abscheideeinrichtung zum Abscheiden des gefärbten Kunststoff-Granulats von dem Granulierwasser und eine zweite Abscheideeinrichtung zum Abscheiden des ungefärbten Kunststoff-Granulats von dem Granulierwasser nachgeordnet. Die Abscheideeinrichtungen sind parallel zueinander angeordnet und sind Teil des jeweils zugehörigen Nachbehandlungskreises. Der erste Nachbehandlungskreis bzw. die erste Abscheideeinrichtung dient in einem Übergangszeitraum nach der Umstellung von der Herstellung des gefärbten Kunststoff-Granulats zu der Herstellung des ungefärbten Kunststoff-Granulats insbesondere auch zum Abscheiden von unreinem Kunststoff-Granulat, das noch restliches Farbmittel enthält. Dadurch, dass lediglich eine einzige Mehrwellen-Schneckenmaschine und eine einzige Unterwasser-Granuliereinrichtung benötigt werden, wird der maschinentechnische Aufwand erheblich reduziert, so dass die wahlweise Herstellung des ungefärbten und des gefärbten Kunststoff-Granulats in einfacher und wirtschaftlicher Weise möglich ist. Durch das Betätigen bzw. Umstellen der Granulatwechseleinheit wird einfach, schnell und flexibel zwischen dem ersten Nachbehandlungskreis und dem zweiten Nachbehandlungskreis ausgewählt, so dass bei der wahlweisen Herstellung des gefärbten und des ungefärbten Kunststoff-Granulats eine hohe Flexibilität und Wirtschaftlichkeit gewährleistet ist. Eine Reinigung in den Nachbehandlungskreisen ist nicht erforderlich. Die Umstellung von der Herstellung des ungefärbten Kunststoff-Granulats zu der Herstellung des gefärbten Kunststoff-Granulats ist problemlos möglich, da das gefärbte Kunststoff-Granulat von dem ungefärbten Kunststoff-Granulat nicht kontaminiert wird. Bei der Umstellung von der Herstellung des gefärbten Kunststoff-Granulats zu der Herstellung des ungefärbten Kunststoff-Granulats wird in dem Übergangszeitraum, in dem die Selbstreinigung der Mehrwellen-Schneckenmaschine und der Unterwasser-Granuliereinrichtung stattfindet, weiterhin der erste Nachbehandlungskreis genutzt, um eine Kontamination des zweiten Nachbehandlungskreises und des ungefärbten Kunststoff-Granulats zu vermeiden. Zusätzlich kann zwischen der Mehrwellen-Schneckenmaschine und der Unterwasser-Granuliereinrichtung eine Schmelzepumpe und/oder eine Siebwechseleinrichtung angeordnet sein, die in dem Übergangszeitraum ebenfalls eine Selbstreinigung durchführen.

Eine Vorrichtung nach Anspruch 2 gewährleistet eine einfache wahlweise Herstellung des gefärbten und des ungefärbten Kunststoff-Granulats. Durch die Granulierwasserwechseleinheit wird zuverlässig gewährleistet, dass keine Vermischung des Granulierwassers des ersten Nachbehandlungskreises und des Granulierwassers des zweiten Nachbehandlungskreises stattfindet. Das Granulierwasser in den Nachbehandlungskreisen bleibt somit voneinander getrennt. Hierdurch wird insbesondere eine Kontamination durch in dem Granulierwasser verbliebenes gefärbtes Kunststoff-Granulat vermieden. Die Granulierwasserwechseleinheit ist beispielsweise derart ausgebildet, dass wahlweise eine erste Granulierwasser-Zuführleitung des ersten Nachbehandlungskreises oder eine zweite Granulierwasser-Zuführleitung des zweiten Nachbehandlungskreises manuell und/oder automatisch mit einer Zuführleitung der Unterwasser-Granuliereinrichtung verbindbar ist. Vorzugsweise ist die Granulierwasserwechseleinheit als Granulierwasserweiche ausgebildet.

Eine Vorrichtung nach Anspruch 3 gewährleistet eine einfache wahlweise Herstellung des gefärbten und des ungefärbten Kunststoff-Granulats. Dadurch, dass in dem jeweiligen Nachbehandlungskreis ein eigener Granulierwasserbehälter angeordnet ist, wird in einfacher und zuverlässiger Weise eine Trennung des Granulierwassers der Nachbehandlungskreise gewährleistet. Hierdurch wird in einfacher Weise eine Kontamination durch in dem Granulierwasser verbliebenes gefärbtes Kunststoff-Granulat vermieden.

Eine Vorrichtung nach Anspruch 4 gewährleistet eine einfache wahlweise Herstellung des gefärbten und des ungefärbten Kunststoff-Granulats. Dadurch, dass in dem jeweiligen Nachbehandlungskreis eine eigene Granulierwasserpumpe angeordnet ist, ist in einfacher Weise eine Trennung des Granulierwassers der Nachbehandlungskreise gewährleistet. Hierdurch wird eine Kontamination durch in dem Granulierwasser verbliebenes gefärbtes Kunststoff-Granulat vermieden. Die jeweilige Granulierwasserpumpe ist insbesondere dem jeweiligen Granulierwasserbehälter nachgeordnet.

Eine Vorrichtung nach Anspruch 5 gewährleistet eine einfache wahlweise Herstellung des gefärbten und des ungefärbten Kunststoff-Granulats. Dadurch, dass das Granulierwasser aus der ersten Abscheideeinrichtung und aus der zweiten Abscheideeinrichtung in einem gemeinsamen Granulierwasserbehälter gesammelt wird, kann das gemischte Granulierwasser in einfacher Weise gefiltert und gereinigt werden. Hierdurch wird in einfacher Weise eine Kontamination durch in dem Granulierwasser verbliebenes gefärbtes Kunststoff-Granulat vermieden.

Eine Vorrichtung nach Anspruch 6 gewährleistet eine einfache wahlweise Herstellung des gefärbten und des ungefärbten Kunststoff-Granulats. Dadurch, dass eine gemeinsame Granulierwasserpumpe in einer gemeinsamen Granulierwasser-Zuführleitung angeordnet ist, ist eine einfache Zuführung des Granulierwassers zu mindestens einer Filtereinrichtung und zu der Unterwasser-Granuliereinrichtung möglich. Vorzugsweise ist die Granulierwasserpumpe dem gemeinsamen Granulierwasserbehälter nachgeordnet.

Eine Vorrichtung nach Anspruch 7 gewährleistet eine einfache wahlweise Herstellung des gefärbten und des ungefärbten Kunststoff-Granulats. Durch die mindestens eine Filtereinrichtung ist eine einfache Reinigung des Granulierwassers möglich. Die mindestens eine Filtereinrichtung ist beispielsweise zwischen mindestens einer der Abscheideeinrichtungen und einem gemeinsamen Granulierwasserbehälter und/oder zwischen einem gemeinsamen Granulierwasserbehälter und der Unterwasser-Granuliereinrichtung angeordnet. Mittels der mindestens einen Filtereinrichtung wird vorzugsweise gefärbtes Kunststoff-Granulat und/oder unreines Kunststoff-Granulat aus dem Granulierwasser gefiltert. Die jeweilige Filtereinrichtung umfasst mindestens einen Granulierwasser-Filter. Vorzugsweise weist die jeweilige Filtereinrichtung mindestens zwei Granulierwasser-Filter auf, die parallel zueinander angeordnet sind. Die jeweilige Filtereinrichtung ist insbesondere derart betreibbar, dass die mindestens zwei Granulierwasser-Filter gemeinsam und/oder einzeln betreibbar sind. Hierdurch ist eine einfache Wartung bzw. Reinigung und/oder ein einfacher Austausch des jeweiligen Granulierwasser-Filters möglich.

Eine Vorrichtung nach Anspruch 8 gewährleistet eine einfache wahlweise Herstellung des gefärbten und des ungefärbten Kunststoff-Granulats. Die Granulierwasser-Filter sind insbesondere mittels Absperrelementen gemeinsam und/oder einzeln betreibbar. Hierdurch ist eine einfache Wartung und/oder ein einfacher Austausch der Granulierwasser-Filter möglich.

Eine Vorrichtung nach Anspruch 9 gewährleistet eine einfache und wirtschaftliche wahlweise Herstellung des gefärbten und des ungefärbten Kunststoff-Granulats. Durch die Farbgranulatwechseleinheit wird eine einfache und zuverlässige Trennung des gefärbten Kunststoff-Granulats und des unreinen Kunststoff-Granulats, das nach der Umstellung von der Herstellung des gefärbten Kunststoff-Granulats zu der Herstellung des ungefärbten Kunststoff-Granulats in einem Übergangszeitraum entsteht, ermöglicht. Das unreine Kunststoff-Granulat beeinträchtigt somit nicht die Qualität des gefärbten Kunststoff-Granulats. Das unreine Kunststoff-Granulat kann als solches verkauft oder bei einer nachfolgenden Herstellung des gefärbten Kunststoff-Granulats in die Mehrwellen-Schneckenmaschine zugeführt und auf diese Weise wirtschaftlich weiterverarbeitet werden. Die Farbgranulatwechseleinheit ist beispielsweise derart ausgebildet, dass die erste Abscheideeinrichtung manuell und/oder automatisch wahlweise mit einer Klassierleitung für das gefärbte Kunststoff-Granulat oder einer Klassierleitung für das unreine Kunststoff-Granulat verbindbar ist. Vorzugsweise ist die Farbgranulatwechseleinheit als Farbgranulatweiche ausgebildet.

Eine Vorrichtung nach Anspruch 10 gewährleistet eine einfache, flexible und wirtschaftliche wahlweise Herstellung des gefärbten und des ungefärbten Kunststoff-Granulats. Durch die Farbgranulatwechseleinheit und die separaten Speicherbehälter ist in einfacher Weise eine getrennte Speicherung des gefärbten Kunststoff-Granulats und des unreinen Kunststoff-Granulats möglich. Der mindestens eine zweite Speicherbehälter ermöglicht insbesondere - je nach Wirtschaftlichkeit - einen Verkauf des unreinen Kunststoff-Granulats oder eine Weiterverarbeitung in der Mehrwellen-Schneckenmaschine.

Eine Vorrichtung nach Anspruch 11 gewährleistet eine wirtschaftliche wahlweise Herstellung des gefärbten und des ungefärbten Kunststoff-Granulats. Die Rückführleitung ermöglicht das Zuführen von unreinem Kunststoff-Granulat von dem mindestens einen zweiten Speicherbehälter zu der Mehrwellen-Schneckenmaschine und somit die Weiterverarbeitung des unreinen Kunststoff-Granulats zu gefärbtem Kunststoff-Granulat.

Eine Vorrichtung nach Anspruch 12 erhöht die Wirtschaftlichkeit der wahlweisen Herstellung des gefärbten und des ungefärbten Kunststoff-Granulats. Durch die Klassiereinrichtung ist ein Klassieren des unreinen Kunststoff-Granulats in eine Untergröße, eine Normgröße und eine Übergröße möglich. Für die jeweilige Granulatgröße, also die Untergröße, die Normgröße und die Übergröße ist ein zugehöriger zweiter Speicherbehälter vorgesehen. Je nach Wirtschaftlichkeit wird das unreine Kunststoff-Granulat mit einer bestimmten Granulatgröße entweder verkauft oder in der Mehrwellen-Schneckenmaschine weiterverarbeitet. Beispielsweise wird das unreine Kunststoff-Granulat mit der Normgröße verkauft, wohingegen das unreine Kunststoff-Granulat mit der Untergröße und der Übergröße zur Weiterverarbeitung in die Mehrwellen-Schneckenmaschine zurückgeführt wird.

Eine Vorrichtung nach Anspruch 13 gewährleistet eine einfache und flexible wahlweise Herstellung des gefärbten und des ungefärbten Kunststoff-Granulats. Durch die zwei separaten Zuführöffnungen erfolgt eine separate Zuführung des ungefärbten Kunststoffmaterials, also beispielsweise des naturfarbenen, pulverförmigen Kunststoffmaterials, und des Farbmittels. Das Farbmittel wird beispielsweise als pulverförmiges Farbmittel und/oder als Masterbatch-Granulat mit darin gebundenem Farbmittel und/oder als unreines Kunststoff-Granulat mit darin gebundenem restlichen Farbmittel, zugeführt. Hierdurch wird eine Kontamination durch Farbmittel im Bereich der Zuführöffnungen bei der Herstellung des ungefärbten Kunststoff-Granulats vermieden.

Eine Vorrichtung nach Anspruch 14 gewährleistet eine einfache, flexible und wirtschaftliche wahlweise Herstellung des gefärbten und des ungefärbten Kunststoff-Granulats. Dadurch, dass die mindestens zwei Behandlungselementwellen einander dichtkämmend ausgebildet sind, reinigen sich diese in einfacher Weise selbst. Zudem wird durch die abstreifende Ausbildung in einfacher Weise die Innenwand des Gehäuses gereinigt. Für eine Abmessung A₁ eines Spalts zwischen den mindestens zwei Behandlungselementwellen und/oder einer Abmessung A₂ eines Spalts zwischen der jeweiligen Behandlungselementwelle und der Innenwand des Gehäuses gilt im Verhältnis zu einem Außendurchmesser D der Behandlungselementwellen:
0,003 ≤ A₁ / D ≤ 0,05, insbesondere 0,004 ≤ A₁ / D ≤ 0,035, und insbesondere 0,011 ≤ A₁ / D ≤ 0,02
und/oder
0,004 ≤ A₂ / D ≤ 0,03, insbesondere 0,005 ≤ A₂ / D ≤ 0,025, und insbesondere 0,012 ≤ A₂ / D ≤ 0,019.

Der Erfindung liegt ferner die Aufgabe zugrunde, ein Verfahren zu schaffen, das in einfacher, flexibler und wirtschaftlicher Weise die wahlweise Herstellung von gefärbtem und von ungefärbtem Kunststoff-Granulat ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Vorrichtung.

Ein Verfahren nach Anspruch 16 gewährleistet eine wirtschaftliche wahlweise Herstellung des gefärbten und des ungefärbten Kunststoff-Granulats. In einem Übergangszeitraum nach dem Beginn der Herstellung des ungefärbten Kunststoff-Granulats wird das aufgrund von restlichem Farbmittel zunächst entstehende unreine Kunststoff-Granulat weiterhin der ersten Abscheideeinrichtung zugeführt und mittels einer nachfolgenden Farbgranulatwechseleinheit von dem gefärbten Kunststoff-Granulat separiert bzw. separiert gehalten. Nachdem die Selbstreinigung der Mehrwellen-Schneckenmaschine und der Unterwasser-Granuliereinrichtung abgeschlossen ist, wird die Granulatwechseleinheit umgestellt und das dann hergestellte ungefärbte Kunststoff-Granulat der zweiten Abscheideeinrichtung zugeführt.

Ein Verfahren nach Anspruch 17 gewährleistet eine wirtschaftliche wahlweise Herstellung des gefärbtem und des ungefärbten Kunststoff-Granulats. Durch die Zuführung des unreinen Kunststoff-Granulats zu der Mehrwellen-Schneckenmaschine erfolgt eine Weiterverarbeitung des unreinen Kunststoff-Granulats zu gefärbtem Kunststoff-Granulat.

Ein Verfahren nach Anspruch 18 gewährleistet eine einfache und flexible wahlweise Herstellung des gefärbten und des ungefärbten Kunststoff-Granulats. Durch die Granulierwasserwechseleinheit wird das für die Herstellung des gefärbten und des ungefärbten Kunststoff-Granulats verwendete Granulierwasser getrennt gehalten. Hierdurch wird eine Kontamination des ungefärbten Kunststoff-Granulats durch im Granulierwasser verbliebenes gefärbtes Kunststoff-Granulat vermieden.

Ein Verfahren nach Anspruch 19 gewährleistet eine einfache und flexible wahlweise Herstellung des gefärbten und des ungefärbten Kunststoff-Granulats. Durch die mindestens eine Filtereinrichtung wird das Granulierwasser vor der Zuführung in die Unterwasser-Granuliereinrichtung gefiltert und gereinigt. Hierdurch wird eine Kontamination des ungefärbten Kunststoff-Granulats durch im Granulierwasser verbliebenes gefärbtes Kunststoff-Granulat vermieden.

Weitere Merkmale, Vorteile und Einzelheiten der Erfindung ergeben sich aus der nachfolgenden Beschreibung mehrerer Ausführungsbeispiele. Es zeigen:
- Fig. 1: eine schematische Darstellung einer Vorrichtung zur wahlweisen Herstellung von gefärbtem und ungefärbtem Kunststoff-Granulat gemäß einem ersten Ausführungsbeispiel,
- Fig. 2: eine Schnittdarstellung einer Mehrwellen-Schneckenmaschine der Vorrichtung in Fig. 1, und
- Fig. 3: eine schematische Darstellung einer Vorrichtung zur wahlweisen Herstellung von gefärbtem und ungefärbtem Kunststoff-Granulat gemäß einem zweiten Ausführungsbeispiel.

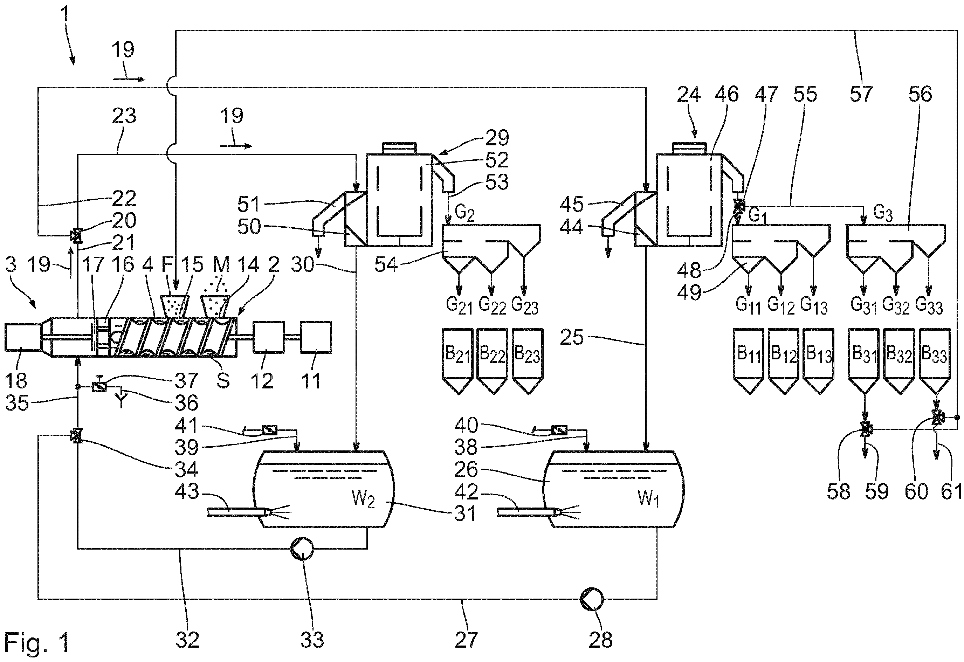

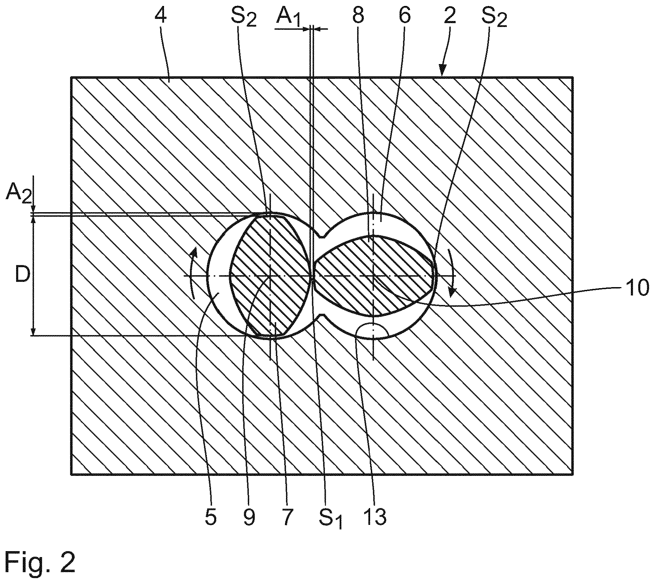

Nachfolgend ist anhand der Fig. 1 und 2 ein erstes Ausführungsbeispiel der Erfindung beschrieben. Eine Vorrichtung 1 umfasst zur Herstellung von gefärbtem Kunststoff-Granulat G₁ und von ungefärbtem Kunststoff-Granulat G₂ eine Mehrwellen-Schneckenmaschine 2 mit einer nachgeordneten Unterwasser-Granuliereinrichtung 3. Die Mehrwellen-Schneckenmaschine 2 weist ein Gehäuse 4 auf, in dem zwei einander durchdringende Gehäusebohrungen 5, 6 ausgebildet sind. In den Gehäusebohrungen 5, 6 sind Behandlungselementwellen 7, 8 um zugehörige Drehachsen 9, 10 drehbar angeordnet. Die Behandlungselementwellen 7, 8 sind von einem Antriebsmotor 11 über ein zugehöriges Verteilergetriebe 12 gleichsinnig, also in gleichen Drehrichtungen drehantreibbar. Die Behandlungselementwellen 7, 8 sind einander dichtkämmend und eine Innenwand 13 des Gehäuses 4 abstreifend ausgebildet. Hierzu sind die Behandlungselementwellen 7, 8 derart zueinander angeordnet, dass ein von den Behandlungselementwellen 7, 8 begrenzter Spalt Si eine Abmessung A₁ hat, wobei für die Abmessung A₁ im Verhältnis zu einem Außendurchmesser D der Behandlungselementwellen 7, 8 gilt: 0,003 ≤ A₁ / D ≤ 0,05, insbesondere 0,004 ≤ A₁ / D ≤ 0,035, und insbesondere 0,011 ≤ A₁ / D ≤ 0,02.

Weiterhin bilden die Behandlungselementwellen 7, 8 mit der Innenwand 13 einen jeweiligen Spalt S₂ aus, der eine zugehörige Abmessung A₂ hat, wobei für das Verhältnis der Abmessung A₂ zu dem Außendurchmesser D gilt: 0,004 ≤ A₂ / D ≤ 0,03, insbesondere 0,005 ≤ A₂ / D ≤ 0,025, und insbesondere 0,012 ≤ A₂ / D ≤ 0,019.

Die Mehrwellen-Schneckenmaschine 2 weist weiterhin eine erste Zuführöffnung 14 und eine zweite Zuführöffnung 15 auf, die in dem Gehäuse 4 ausgebildet sind und in die Gehäusebohrungen 5, 6 münden. Die Zuführöffnungen 14, 15 dienen zur separaten Zuführung von ungefärbtem bzw. naturfarbenem Kunststoffmaterial M, also beispielsweise von pulverförmigem Kunststoffmaterial M und von Farbmittel F, beispielsweise von pulverförmigem Ruß oder von Ruß enthaltendem Masterbatch-Granulat. An der Mehrwellen-Schneckenmaschine 2 ist austragsseitig eine Lochplatte 16 angeordnet, durch die eine von der Mehrwellen-Schneckenmaschine 2 erzeugte Kunststoff-Schmelze S in Form von Kunststoff-Strängen extrudierbar ist, die wiederum mittels mindestens eines drehantreibbaren Schneidmessers 17 zu dem Kunststoff-Granulat G₁ bzw. G₂ zerschneidbar sind. Das mindestens eine Schneidmesser 17 ist mittels eines Messer-Antriebsmotors 18 drehantreibbar. Die Lochplatte 16, das mindestens eine Schneidmesser 17 und der Messer-Antriebsmotor 18 sind Teil der Unterwasser-Granuliereinrichtung 3.

Der Unterwasser-Granuliereinrichtung 3 ist in einer Förderrichtung 19 eine Granulatwechseleinheit 20 nachgeordnet, die eine Austragsleitung 21 der Unterwasser-Granuliereinrichtung 3 in eine erste Förderleitung 22 und eine zweite Förderleitung 23 aufteilt. Die Granulatwechseleinheit 20 ist vorzugsweise als Granulatweiche ausgebildet. Die nachfolgenden Ausführungen gelten für eine beliebig ausgebildete Granulatwechseleinheit 20.

Die erste Förderleitung 22 bildet den Anfang eines ersten Nachbehandlungskreises, in dem in der Förderrichtung 19 nacheinander eine erste Abscheideeinrichtung 24, eine erste Granulierwasser-Rückführleitung 25, ein erster Granulierwasserbehälter 26 und eine erste Granulierwasser-Zuführleitung 27 mit einer ersten Granulierwasserpumpe 28 angeordnet sind. In entsprechender Weise bildet die zweite Förderleitung 23 den Anfang eines zweiten Nachbehandlungskreises, in dem in der Förderrichtung 19 nacheinander eine zweite Abscheideeinrichtung 29, eine zweite Granulierwasser-Rückführleitung 30, ein zweiter Granulierwasserbehälter 31 und eine zweite Granulierwasser-Zuführleitung 32 mit einer zweiten Granulierwasserpumpe 33 angeordnet sind. Die Nachbehandlungskreise sind parallel zueinander angeordnet. Die Granulierwasser-Zuführleitungen 27 und 32 werden mittels einer Granulierwasserwechseleinheit 34 wieder zusammengeführt, so dass Granulierwasser W₁ des ersten Nachbehandlungskreises oder Granulierwasser W₂ des zweiten Nachbehandlungskreises über eine Zuführleitung 35 der Unterwasser-Granuliereinrichtung 3 zuführbar ist. Die Granulierwasserwechseleinheit 34 ist vorzugsweise als Granulierwasserweiche ausgebildet. Die nachfolgenden Ausführungen gelten für eine beliebig ausgebildete Granulierwasserwechseleinheit 34. Ausgehend von der Zuführleitung 35 erstreckt sich eine Auslassleitung 36, die über ein Absperrelement 37 geöffnet oder geschlossen werden kann.

Die Granulierwasserbehälter 26, 31 weisen jeweils eine Frischwasser-Zuführleitung 38, 39 mit einem zugehörigen Absperrelement 40, 41 sowie eine Granulierwasserheizung 42, 43 auf.

Die erste Abscheideeinrichtung 24 umfasst zum Trennen des Granulierwassers W₁ und des gefärbten Kunststoff-Granulats G₁ einen ersten Abscheider 44, einen ersten Agglomerat-Abscheider 45 und einen ersten Granulattrockner 46. Dem ersten Granulattrockner 46 ist in der Förderrichtung 19 eine Farbgranulatwechseleinheit 47 nachgeordnet. Die Farbgranulatwechseleinheit 47 ist vorzugsweise als Farbgranulatweiche ausgebildet. Die nachfolgenden Ausführungen gelten für eine beliebig ausgebildete Farbgranulatwechseleinheit 47. Ausgehend von der Farbgranulatwechseleinheit 47 erstreckt sich eine erste Klassierleitung 48 zu einer ersten Klassiereinrichtung 49. Die erste Klassiereinrichtung 49 dient zum Klassieren des gefärbten Granulats G₁ und weist beispielsweise nicht näher dargestellte Siebe auf, die das gefärbte Kunststoff-Granulat G₁ in eine Untergröße G₁₁, eine Normgröße G₁₂ und eine Übergröße G₁₃ klassieren. Die erste Klassiereinrichtung 49 mündet ausgangsseitig in einen Speicherbehälter B₁₁ für die Untergröße G₁₁, einen Speicherbehälter B₁₂ für die Normgröße G₁₂ und einen Speicherbehälter B₁₃ für die Übergröße G₁₃ des gefärbten Kunststoff-Granulats G₁.

Die zweite Abscheideeinrichtung 29 weist zum Trennen des Granulierwassers W₂ und des ungefärbten Kunststoff-Granulats G₂ einen zweiten Abscheider 50, einen zweiten Agglomerat-Abscheider 51 und einen zweiten Granulattrockner 52 auf. Eine zweite Klassierleitung 53 verbindet den zweiten Granulattrockner 52 direkt mit einer zweiten Klassiereinrichtung 54. Die zweite Klassiereinrichtung 54 dient zum Klassieren des ungefärbten Kunststoff-Granulats G₂ in eine Untergröße G₂₁, eine Normgröße G₂₂ und eine Übergröße G₂₃. Hierzu weist die zweite Klassiereinrichtung 54 nicht näher dargestellte Siebe auf. Ausgangsseitig der zweiten Klassiereinrichtung 54 sind ein Speicherbehälter B₂₁ für die Untergröße G₂₁, ein Speicherbehälter B₂₂ für die Normgröße G₂₂ und ein Speicherbehälter B₂₃ für die Übergröße G₂₃ angeordnet.

Weiterhin erstreckt sich ausgehend von der Farbgranulatwechseleinheit 47 eine dritte Klassierleitung 55, die zu einer dritten Klassiereinrichtung 56 führt. Die dritte Klassiereinrichtung 56 dient zum Klassieren von unreinem Kunststoff-Granulat G₃, das in einem Übergangszeitraum nach der Umstellung von der Herstellung des gefärbten Kunststoff-Granulats G₁ zu der Herstellung des ungefärbten Kunststoff-Granulats G₂ entsteht und mittels der Farbgranulatwechseleinheit 47 separierbar und mittels der dritten Klassiereinrichtung 56 klassierbar ist. Die dritte Klassiereinrichtung 56 dient somit zum Klassieren des unreinen Kunststoff-Granulats G₃ in eine Untergröße G₃₁, eine Normgröße G₃₂ und eine Übergröße G₃₃. Hierzu sind in der dritten Klassiereinrichtung 56 nicht näher dargestellte Siebe angeordnet. Ausgangsseitig der dritten Klassiereinrichtung 56 ist ein Speicherbehälter B₃₁ für die Untergröße G₃₁, ein Speicherbehälter B₃₂ für die Normgröße G₃₂ und ein Speicherbehälter B₃₃ für die Übergröße G₃₃ des unreinen Kunststoff-Granulats G₃ angeordnet.

Zum Zurückführen der Untergröße G₃₁ und der Übergröße G₃₃ des unreinen Kunststoff-Granulats G₃ zu der Mehrwellen-Schneckenmaschine 2 ist eine Rückführleitung 57 zwischen dem Speicherbehälter B₃₁ bzw. dem Speicherbehälter B₃₃ und der Mehrwellen-Schneckenmaschine 2 angeordnet. Hierzu ist ausgangsseitig des Speicherbehälters B₃₁ eine erste Rückführwechseleinheit 58 angeordnet, so dass der Speicherbehälter B₃₁ ausgangsseitig in die Rückführleitung 57 oder eine erste Abtransportleitung 59 mündet. In entsprechender Weise ist ausgangsseitig des Speicherbehälters B₃₃ eine zweite Rückführwechseleinheit 60 angeordnet, so dass der Behälter B₃₃ ausgangsseitig entweder in die Rückführleitung 57 oder eine zweite Abtransportleitung 61 mündet. Die Rückführleitung 57 mündet über die erste Zuführöffnung 14 oder die zweite Zuführöffnung 15 in die Gehäusebohrungen 5, 6. In Fig. 1 ist beispielhaft eine Zuführung über die zweite Zuführöffnung 15 dargestellt. Die Rückführwechseleinheiten 58, 60 sind vorzugsweise als Rückführweichen ausgebildet.

Die Funktionsweise der Vorrichtung 1 ist wie folgt:
Zunächst wird die Herstellung des ungefärbten Kunststoff-Granulats G₂ beschrieben. Der Mehrwellen-Schneckenmaschine 2 wird über die erste Zuführöffnung 14 ungefärbtes bzw. naturfarbenes Kunststoffmaterial M zugeführt. Das Kunststoffmaterial M ist beispielsweise pulverförmig. Mittels der Behandlungselementwellen 7, 8 wird das Kunststoffmaterial M aufgeschmolzen, so dass aus den Gehäusebohrungen 5, 6 eine ungefärbte Kunststoff-Schmelze S ausgetragen wird und durch die Lochplatte 16 ungefärbte Kunststoff-Stränge extrudiert werden. Die ungefärbten Kunststoff-Stränge werden mittels des rotierenden mindestens einen Schneidmessers 17 zu dem ungefärbten Kunststoff-Granulat G₂ zerschnitten. Das Kunststoff-Granulat G₂ wird mittels des Granulierwassers W₂ über die Austragsleitung 21 aus der Unterwasser-Granuliereinrichtung 3 ausgetragen und über die Granulatwechseleinheit 20 dem zweiten Nachbehandlungskreis zugeführt. Über die zweite Förderleitung 23 gelangt das ungefärbte Kunststoff-Granulat G₂ zu der zweiten Abscheideeinrichtung 29, die das ungefärbte Kunststoff-Granulat G₂ von dem Granulierwasser W₂ abscheidet und trocknet. Anschließend wird das ungefärbte Kunststoff-Granulat G₂ über die zweite Klassierleitung 53 der zweiten Klassiereinrichtung 54 zugeführt. Die zweite Klassiereinrichtung 54 klassiert das ungefärbte Kunststoff-Granulat G₂ in die Untergröße G₂₁, die Normgröße G₂₂ und die Übergröße G₂₃, die in den zugehörigen Speicherbehältern B₂₁, B₂₂ und B₂₃ zum Abverkauf bzw. Abtransport gespeichert werden.

Das Granulierwasser W₂ gelangt über die zweite Granulierwasser-Rückführleitung 30 zu dem zweiten Granulierwasserbehälter 31 und von dort mittels der zweiten Granulierwasserpumpe 33 über die zweite Granulierwasser-Zuführleitung 32 und die Granulierwasserwechseleinheit 34 wieder zu der Zuführleitung 35, die das Granulierwasser W₂ erneut der Unterwasser-Granuliereinrichtung 3 zuführt. Bei Bedarf wird über die zweite Frischwasser-Zuführleitung 39 Granulierwasser W₂ in dem Granulierwasserbehälter 31 ergänzt und das Granulierwasser W₂ über die zweite Granulierwasserheizung 43 auf eine gewünschte Temperatur gebracht.

Die Umstellung der Herstellung von dem ungefärbten Kunststoff-Granulat G₂ zu dem gefärbten Kunststoff-Granulat G₁ ist in einfacher Weise möglich. Zur Herstellung des gefärbten Kunststoff-Granulats G₁ wird die Zuführung des Kunststoffmaterials M unterbrochen und die Mehrwellen-Schneckenmaschine 2 leergefahren. Anschließend werden die Granulatwechseleinheit 20 und die Granulierwasserwechseleinheit 34 umgestellt und der Mehrwellen-Schneckenmaschine 2 über die erste Zuführöffnung 14 Kunststoffmaterial M und über die zweite Zuführöffnung 15 Farbmittel F zugeführt. Das Farbmittel F ist beispielsweise pulverförmig ausgebildet oder in einem Masterbatch-Granulat gebunden. Das Farbmittel F ist beispielsweise Ruß. Zusätzlich oder alternativ wird der Schneckenmaschine über die Rückführleitung 57 die Untergröße G₃₁ und/oder die Übergröße G₃₃ des unreinen Kunststoff-Granulats G₃ zugeführt, das in den zugehörigen Speicherbehältern B₃₁ und B₃₃ gespeichert ist. Mittels der Behandlungselementwellen 7, 8 wird in den Gehäusebohrungen 5, 6 die gefärbte Kunststoff-Schmelze S erzeugt und durch die Lochplatte 16 ausgetragen. Die extrudierten gefärbten Kunststoff-Stränge werden mittels des mindestens einen Schneidmessers 17 zu dem gefärbten Kunststoff-Granulat G₁ zerschnitten. Das gefärbte Kunststoff-Granulat G₁ wird mittels des Granulierwassers W₁ über die Austragsleitung 21 aus der Unterwasser-Granuliereinrichtung 3 ausgetragen und dem ersten Nachbehandlungskreis zugeführt. Über die erste Förderleitung 22 wird das gefärbte Kunststoff-Granulat G₁ der ersten Abscheideeinrichtung 24 zugeführt, die das gefärbte Kunststoff-Granulat G₁ von dem Granulierwasser W₁ abtrennt und trocknet. Das getrocknete gefärbte Kunststoff-Granulat G₁ wird über die Farbgranulatwechseleinheit 47 der ersten Klassierleitung 48 und der nachgeordneten ersten Klassiereinrichtung 49 zugeführt. Die erste Klassiereinrichtung 49 klassiert das gefärbte Kunststoff-Granulat G₁ in die Untergröße G₁₁, die Normgröße G₁₂ und die Übergröße G₁₃, die in den zugehörigen Speicherbehältern B₁₁, B₁₂ und B₁₃ zum Abtransport bzw. Abverkauf gespeichert werden.

Das Granulierwasser W₁ gelangt über die erste Granulierwasser-Rückführleitung 25 zu dem ersten Granulierwasserbehälter 26 und von dort mittels der ersten Granulierwasserpumpe 28 über die erste Granulierwasser-Zuführleitung 27 und die Granulierwasserwechseleinheit 34 wieder zu der Zuführleitung 35, die das Granulierwasser W₁ erneut der Unterwasser-Granuliereinrichtung 3 zuführt. Bei Bedarf wird über die erste Frischwasser-Zuführleitung 38 Granulierwasser W₁ in dem Granulierwasserbehälter 26 ergänzt und das Granulierwasser W₁ über die erste Granulierwasserheizung 42 auf eine gewünschte Temperatur gebracht.

Die Umstellung der Herstellung von dem gefärbten Kunststoff-Granulat G₁ zu dem ungefärbten Kunststoff-Granulat G₂ ist problematisch, da die Mehrwellen-Schneckenmaschine 2 und die Unterwasser-Granuliereinrichtung 3 durch das Farbmittel F verunreinigt sind. Zur Umstellung der Herstellung wird die Zuführung von Farbmittel F und/oder von der Untergröße G₃₁ bzw. der Übergröße G₃₃ des unreinen Kunststoff-Granulats G₃ unterbrochen, so dass der Mehrwellen-Schneckenmaschine 2 ausschließlich das Kunststoffmaterial M zugeführt wird. Zudem wird die Farbgranulatwechseleinheit 47 umgestellt, so dass das nun entstehende unreine Kunststoff-Granulat G₃ über die dritte Klassierleitung 55 der dritten Klassiereinrichtung 56 zugeführt wird. In einem Übergangszeitraum führt die Mehrwellen-Schneckenmaschine 2 und die Unterwasser-Granuliereinrichtung 3 eine Selbstreinigung durch, bei der die in der Mehrwellen-Schneckenmaschine 2 erzeugte Kunststoff-Schmelze S aufgrund der dichtkämmenden Ausbildung der Behandlungselementwellen 7, 8 und dem Abstreifen der Innenwand 13 restliches Farbmittel F aus der Mehrwellen-Schneckenmaschine 2 entfernt und nachfolgend die Lochplatte 16 und das mindestens eine Schneidmesser 17 reinigt. Das in der Unterwasser-Granuliereinrichtung 2 entstehende unreine Kunststoff-Granulat G₃ wird über die Granulatwechseleinheit 20 dem ersten Nachbehandlungskreis zugeführt und über die erste Abscheideeinrichtung 24 von dem Granulierwasser W₁ getrennt und in der bereits beschriebenen Weise der dritten Klassiereinrichtung 56 zugeführt. Die dritte Klassiereinrichtung 56 klassiert das unreine Kunststoff-Granulat G₃ in die Untergröße G₃₁, die Normgröße G₃₂ und die Übergröße G₃₃, die in den zugehörigen Speicherbehältern B₃₁, B₃₂ und B₃₃ gespeichert werden. Durch die Rückführwechseleinheiten 58, 60 kann die Untergröße G₃₁ und die Übergröße G₃₃ - je nach Wirtschaftlichkeit - zum Abtransport bzw. Abverkauf oder zum Rückführen gespeichert werden. Die Normgröße G₃₂ ist beispielhaft lediglich zum Abtransport bzw. Abverkauf gespeichert.

Nachdem die Selbstreinigung in dem Übergangszeitraum abgeschlossen ist, wird die Zuführung des Kunststoffmaterials M unterbrochen und die Mehrwellen-Schneckenmaschine 2 leergefahren. Anschließend werden die Granulatwechseleinheit 20 und die Granulierwasserwechseleinheit 34 umgestellt. Durch die Zuführung des Kunststoffmaterials M wird nun in der bereits beschriebenen Weise wieder das ungefärbte Kunststoff-Granulat G₂ hergestellt und dem zweiten Nachbehandlungskreis zugeführt.

Die erfindungsgemäße Vorrichtung 1 ermöglicht die wahlweise Herstellung von gefärbtem Kunststoff-Granulat G₁ und von ungefärbtem Kunststoff-Granulat G₂ mit lediglich einer einzigen Mehrwellen-Schneckenmaschine 2 und einer einzigen Unterwasser-Granuliereinrichtung 3. Der maschinentechnische Aufwand ist hierdurch vergleichsweise gering. Das bei der Umstellung der Herstellung von dem gefärbten Kunststoff-Granulat G₁ zu dem ungefärbte Kunststoff-Granulat G₂ entstehende unreine Kunststoff-Granulat G₃ wird dem ersten Nachbehandlungskreis zugeführt und separiert. Je nach Wirtschaftlichkeit wird das unreine Kunststoff-Granulat G₃ verkauft oder bei der nachfolgenden Herstellung des gefärbten Kunststoff-Granulats G₁ zu der Mehrwellen-Schneckenmaschine 2 zurückgeführt und weiterverarbeitet. Die Vorrichtung 1 ermöglicht somit eine einfache, flexible und wirtschaftliche Herstellung von wahlweise gefärbtem Kunststoff-Granulat G₁ und ungefärbten Kunststoff-Granulat G₂.

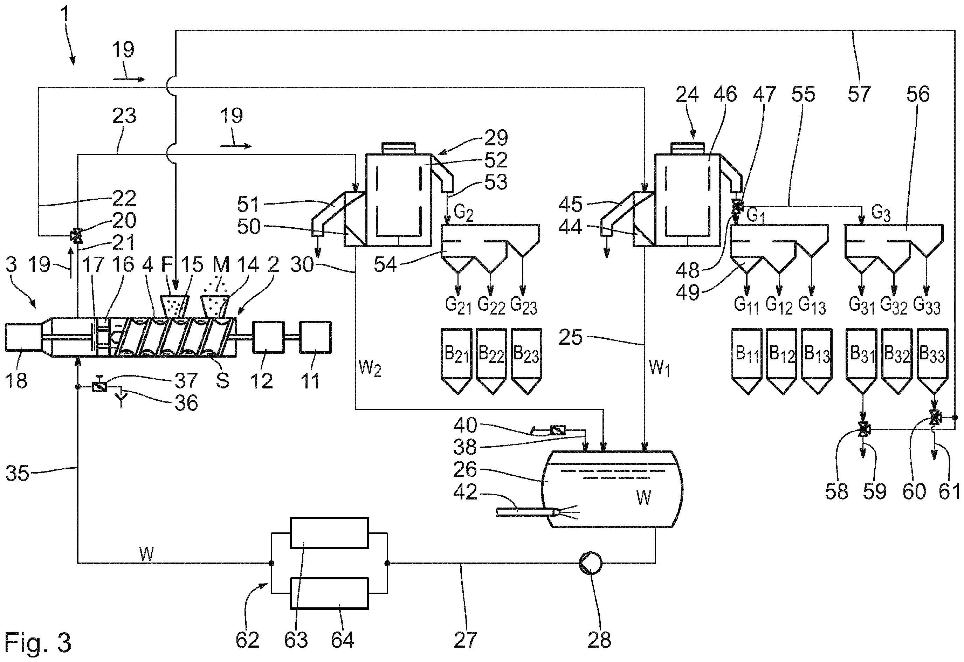

Nachfolgend ist anhand von Fig. 3 ein zweites Ausführungsbeispiel der Erfindung beschrieben. Im Unterschied zu dem ersten Ausführungsbeispiel umfasst der erste Nachbehandlungskreis die erste Förderleitung 22, die erste Abscheideeinrichtung 24 und die erste Granulierwasser-Rückführleitung 25 sowie einen mit dem zweiten Nachbehandlungskreis gemeinsamen Granulierwasserbehälter 26 und eine gemeinsame Granulierwasser-Zuführleitung 27 mit einer gemeinsamen Granulierwasserpumpe 28 und einer gemeinsamen Filtereinrichtung 62. Entsprechend umfasst der zweite Nachbehandlungkreis die zweite Förderleitung 23, die zweite Abscheideeinrichtung 29, die zweite Granulierwasser-Rückführleitung 30 sowie den gemeinsamen Granulierwasserbehälter 26 und die gemeinsame Granulierwasser-Zuführleitung 27 mit der gemeinsamen Granulierwasserpumpe 28 und der gemeinsamen Filtereinrichtung 62. Die Nachbehandlungskreise sind ausgehend von der Granulatwechseleinheit 20 bis zu den Granulierwasser-Rückführleitungen 25, 30 getrennt und bilden ab dem Granulierwasserbehälter 26 bis zu der Granulierwasser-Zuführleitung 27 einen gemeinsamen Nachbehandlungskreis aus. Die Granulierwasserwechseleinheit 34 entfällt hierdurch, sodass die Granulierwasser-Zuführleitung 27 in die Zuführleitung 35 übergeht. Die Filtereinrichtung 62 umfasst zwei Granulierwasser-Filter 63, 64, die parallel zueinander in der Granulierwasser-Zuführleitung 27 angeordnet sind. Die Granulierwasser-Filter 63, 64 können durch nicht näher dargestellte Absperrelemente der Filtereinrichtung 62 gemeinsam oder separat betrieben werden. Die Granulierwasser-Filter 63, 64 können somit gemeinsam oder ausschließlich der Granulierwasser-Filter 63 oder ausschließlich der Granulierwasser-Filter 64 betrieben werden. Hierdurch ist in einfacher Weise eine Wartung oder ein Austausch der Granulierwasser-Filter 63, 64 möglich. Das Granulierwasser W₁ gelangt aus der ersten Abscheideeinrichtung 24 über die erste Granulierwasser-Rückführleitung 25 in den gemeinsamen Granulierwasserbehälter 26. Entsprechend gelangt das Granulierwasser W₂ aus der zweiten Abscheideeinrichtung 29 über die zweite Granulierwasser-Rückführleitung 30 in den gemeinsamen Granulierwasserbehälter 26. Mittels der Granulierwasserpumpe 28 wird das gemischte Granulierwasser W über die Granulierwasser-Zuführleitung 27 der Filtereinrichtung 62 zugeführt. In der Filtereinrichtung 62 wird mittels der Granulierwasser-Filter 63, 64 Kunststoff-Granulat G₁, G₂ und/oder G₃, das sich in dem Granulierwasser W befindet, aus diesem ausgefiltert. Das Granulierwasser W, das nach der Filtereinrichtung 62 über die Zuführleitung 35 der Unterwasser-Granuliereinrichtung 3 zugeführt wird, ist somit von restlichem Kunststoff-Granulat G₁, G₂ und/oder G₃ gereinigt.

Hinsichtlich des weiteren Aufbaus und der weiteren Funktionsweise der Vorrichtung 1 wird auf das erste Ausführungsbeispiel verwiesen.

## Patentansprüche

1. Vorrichtung zur Herstellung von Kunststoff-Granulat mit
- einer Mehrwellen-Schneckenmaschine (2) zur Bereitstellung einer Kunststoff-Schmelze (S),
- einer Unterwasser-Granuliereinrichtung (3) zur Herstellung von in Granulierwasser (W₁, W₂) befindlichem Kunststoff-Granulat (G₁, G₂, G₃) aus der Kunststoff-Schmelze (S),
**gekennzeichnet durch**
- eine der Unterwasser-Granuliereinrichtung (3) in einer Förderrichtung (19) nachgeordnete Granulatwechseleinheit (20) zum Trennen von gefärbtem Kunststoff-Granulat (G₁) und ungefärbtem Kunststoff-Granulat (G₂) und zum Trennen einer Nachbehandlung in einen ersten Nachbehandlungskreis für das gefärbte Kunststoff-Granulat (G₁) und einen zweiten Nachbehandlungskreis für das ungefärbte Kunststoff-Granulat (G₂),
- eine der Granulatwechseleinheit (20) in der Förderrichtung (19) nachgeordnete erste Abscheideeinrichtung (24) zum Abscheiden des gefärbten Kunststoff-Granulats (G₁) von dem Granulierwasser (W₁), die Teil des ersten Nachbehandlungskreises ist, und
- eine der Granulatwechseleinheit (20) in der Förderrichtung (19) nachgeordnete zweite Abscheideeinrichtung (29) zum Abscheiden des ungefärbten Kunststoff-Granulats (G₂) von dem Granulierwasser (W₂), die Teil des zweiten Nachbehandlungskreises ist und parallel zu der ersten Abscheideeinrichtung (24) angeordnet ist.

2. Vorrichtung nach Anspruch 1, **dadurch gekennzeichnet,**
**dass** zwischen den Abscheideeinrichtungen (24, 29) und der Unterwasser-Granuliereinrichtung (3) eine Granulierwasserwechseleinheit (34) zum Zuführen von Granulierwasser (W₁, W₂) aus der ersten Abscheideeinrichtung (24) oder der zweiten Abscheideeinrichtung (29) zu der Unterwasser-Granuliereinrichtung (3) angeordnet ist.

3. Vorrichtung nach Anspruch 2, **dadurch gekennzeichnet,**
**dass** zwischen der ersten Abscheideeinrichtung (24) und der Granulierwasserwechseleinheit (34) ein erster Granulierwasserbehälter (26) und zwischen der zweiten Abscheideeinrichtung (29) und der Granulierwasserwechseleinheit (34) ein zweiter Granulierwasserbehälter (31) angeordnet ist.

4. Vorrichtung nach Anspruch 2 oder 3, **dadurch gekennzeichnet,**
**dass** zwischen der ersten Abscheideeinrichtung (24) und der Granulierwasserwechseleinheit (34) eine erste Granulierwasserpumpe (28) und zwischen der zweiten Abscheideeinrichtung (29) und der Granulierwasserwechseleinheit (34) eine zweite Granulierwasserpumpe (33) angeordnet ist.

5. Vorrichtung nach Anspruch 1, **dadurch gekennzeichnet,**
**dass** zwischen den Abscheideeinrichtungen (24, 29) und der Unterwasser-Granuliereinrichtung (3) ein Granulierwasserbehälter (26) zum Zuführen von Granulierwasser (W₁, W₂) aus den Abscheideeinrichtungen (24, 29) angeordnet ist.

6. Vorrichtung nach Anspruch 1 oder 5, **dadurch gekennzeichnet,**
**dass** zwischen den Abscheideeinrichtungen (24, 29), insbesondere zwischen dem Granulierwasserbehälter (26), und der Unterwasser-Granuliereinrichtung (3) eine Granulierwasserpumpe (28) angeordnet ist.

7. Vorrichtung nach einem der Ansprüche 1 bis 6, **dadurch gekennzeichnet,**
**dass** zwischen mindestens einer der Abscheideeinrichtungen (24, 29), insbesondere zwischen dem Granulierwasserbehälter (26), und der Unterwasser-Granuliereinrichtung (3) mindestens eine Filtereinrichtung (62) angeordnet ist.

8. Vorrichtung nach Anspruch 7, **dadurch gekennzeichnet,**
**dass** die Filtereinrichtung (62) mindestens zwei Granulierwasser-Filter (63, 64) umfasst, die parallel zueinander angeordnet sind.

9. Vorrichtung nach einem der Ansprüche 1 bis 8, **dadurch gekennzeichnet,**
**dass** der ersten Abscheideeinrichtung (24) eine Farbgranulatwechseleinheit (47) zum Trennen von gefärbtem Kunststoff-Granulat (G₁) und unreinem Kunststoff-Granulat (G₃) bei einer Umstellung der Herstellung von gefärbtem Kunststoff-Granulat (G₁) zu ungefärbtem Kunststoff-Granulat (G₂) nachgeordnet ist.

10. Vorrichtung nach Anspruch 9, **dadurch gekennzeichnet,**
**dass** der Farbgranulatwechseleinheit (47) mindestens ein erster Speicherbehälter (B₁₁, B₁₂, B₁₃) zum Speichern von gefärbtem Kunststoff-Granulat (G₁) und mindestens ein zweiter Speicherbehälter (B₃₁, B₃₂, B₃₃) zum Speichern von unreinem Kunststoff-Granulat (G₃) nachgeordnet ist.

11. Vorrichtung nach Anspruch 10, **dadurch gekennzeichnet,**
**dass** zum Zurückführen von unreinem Kunststoff-Granulat (G₃₁, G₃₃) bei der Herstellung von gefärbtem Kunststoff-Granulat (G₁) eine Rückführleitung (57) von dem mindestens einen zweiten Speicherbehälter (B₃₁, B₃₃) zu der Mehrwellen-Schneckenmaschine (2) angeordnet ist.

12. Vorrichtung nach Anspruch 10 oder 11, **dadurch gekennzeichnet,**
**dass** zwischen der Farbgranulatwechseleinheit (47) und mehreren zweiten Speicherbehältern (B₃₁, B₃₂, B₃₃) eine Klassiereinrichtung (56) zum Klassieren des unreinen Kunststoff-Granulats (G₃) angeordnet ist.

13. Vorrichtung nach einem der Ansprüche 1 bis 12, **dadurch gekennzeichnet,**
**dass** die Mehrwellen-Schneckenmaschine (2) eine erste Zuführöffnung (14) zur Zuführung von ungefärbtem Kunststoffmaterial (M) und eine zweite Zuführöffnung (15) zur Zuführung von Farbmittel (F) und/oder von unreinem Kunststoff-Granulat (G₃₁, G₃₃) umfasst.

14. Vorrichtung nach einem der Ansprüche 1 bis 13, **dadurch gekennzeichnet,**
**dass** die Mehrwellen-Schneckenmaschine (2) ein Gehäuse (4) mit mindestens zwei darin ausgebildeten und einander durchdringenden Gehäusebohrungen (5, 6) umfasst,
**dass** in den mindestens zwei Gehäusebohrungen (5, 6) zugehörige Behandlungselementwellen (7, 8) drehantreibbar angeordnet sind, die einander dichtkämmend und eine Innenwand (13) des Gehäuses (4) abstreifend ausgebildet sind.

15. Verfahren zur Herstellung von Kunststoff-Granulat umfassend die Schritte:
- Bereitstellen einer Vorrichtung (1) zur Herstellung von Kunststoff-Granulat (G₁, G₂, G₃) nach mindestens einem der Ansprüche 1 bis 14,
- Herstellen von gefärbtem Kunststoff-Granulat (G₁) mittels der Mehrwellen-Schneckenmaschine (2) und der Unterwasser-Granuliereinrichtung (3) und Abscheiden des gefärbten Kunststoff-Granulats (G₁) mittels der ersten Abscheideeinrichtung (24),
- Umstellen der Granulatwechseleinheit (20),
- Herstellen von ungefärbtem Kunststoff-Granulat (G₂) mittels der Mehrwellen-Schneckenmaschine (2) und der Unterwasser-Granuliereinrichtung (3) und Abscheiden des ungefärbten Kunststoff-Granulats (G₂) mittels der zweiten Abscheideeinrichtung (29).

16. Verfahren nach Anspruch 15, **dadurch gekennzeichnet,**
**dass** die Granulatwechseleinheit (20) nach einem Beginn der Herstellung des ungefärbten Kunststoff-Granulats (G₂) umgestellt wird und bis zur Umstellung der Granulatwechseleinheit (20) entstehendes unreines Kunststoff-Granulat (G₃) mittels der ersten Abscheideeinrichtung (24) und einer nachgeordneten Farbgranulatwechseleinheit (47) separiert wird.

17. Verfahren nach Anspruch 16, **dadurch gekennzeichnet,**
**dass** das unreine Kunststoff-Granulat (G₃₁, G₃₃) bei einer nachfolgenden Herstellung von gefärbtem Kunststoff-Granulat (G₁) zumindest teilweise der Mehrwellen-Schneckenmaschine (2) zugeführt wird.

18. Verfahren nach einem der Ansprüche 15 bis 17, **dadurch gekennzeichnet,**
**dass** eine Granulierwasserwechseleinheit (34) umgestellt wird.

19. Verfahren nach einem der Ansprüche 15 bis 18, **dadurch gekennzeichnet,**
**dass** Granulierwasser (W₁, W₂) aus mindestens einer der Abscheideeinrichtungen (24, 29) vor dem Zuführen zu der Unterwasser-Granuliereinrichtung (3) mittels mindestens einer Filtereinrichtung (62) gefiltert wird.

## Claims

1. A device for producing plastic granulate, having
- a multi-shaft screw extruder (2) for providing a plastic melt (S);
- an underwater pelletizing installation (3) for producing from the plastic melt (S) plastic granulate (G₁, G₂, G₃) that is located in the pelletizing water (W₁, W₂);
**characterized by**
- a granulate changeover unit (20) for separating dyed plastic granulate (G₁) and undyed plastic granulate (G₂) and for separating a post-treatment into a first post-treatment circuit for the dyed plastic granulate (G₁) and a second post-treatment circuit for the undyed plastic granulate (G₂), said granulate changeover unit (20) in a conveying direction (19) being disposed downstream of the underwater pelletizing installation (3);
- a first separator installation (24) for separating the dyed plastic granulate (G₁) from the pelletizing water (W₁), said first separator installation (24), which is part of the first post-treatment circuit, in the conveying direction (19) being disposed downstream of the granulate changeover unit (20); and
- a second separator installation (29) for separating the undyed plastic granulate (G₂) from the pelletizing water (W₂), said second separator installation (29), which is part of the second post-treatment circuit, being disposed downstream of the granulate changeover unit (20) in the conveying direction (19) and so as to be parallel with the first separator installation (24).

2. The device as claimed in claim 1, **characterized in that**
a pelletizing water changeover unit (34) for feeding pelletizing water (W₁, W₂) from the first separator installation (24) or the second separator installation (29) to the underwater pelletizing installation (3) is disposed between the separator installations (24, 29) and the underwater pelletizing installation (3).

3. The device as claimed in claim 2, **characterized in that**
a first pelletizing water container (26) is disposed between the first separator installation (24) and the pelletizing water changeover unit (34), and a second pelletizing water container (31) is disposed between the second separator installation (29) and the pelletizing water changeover unit (34).

4. The device as claimed in claim 2 or 3, **characterized in that**
a first pelletizing water pump (28) is disposed between the first separator installation (24) and the pelletizing water changeover unit (34), and a second pelletizing water pump (33) is disposed between the second separator installation (29) and the pelletizing water changeover unit (34).

5. The device as claimed in claim 1, **characterized in that**
a pelletizing water container (26) for feeding pelletizing water (W₁, W₂) from the separator installations (24, 29) is disposed between the separator installations (24, 29) and the underwater pelletizing installation (3).

6. The device as claimed in claim 1 or 5, **characterized in that**
a pelletizing water pump (28) is disposed between the separator installations (24, 29), in particular between the pelletizing water container (26) and the underwater pelletizing installation (3).

7. The device as claimed in one of claims 1 to 6, **characterized in that**
at least one filter installation (62) is disposed between at least one of the separator installations (24, 29), in particular between the pelletizing water container (26), and the underwater pelletizing installation (3).

8. The device as claimed in claim 7, **characterized in that**
the filter installation (62) comprises at least two pelletizing water filters (63, 64) which are disposed so as to be mutually parallel.

9. The device as claimed in one of claims 1 to 8, **characterized in that**
a color granulate changeover unit (47) for separating dyed plastic granulate (G₁) and impure plastic granulate (G₃) in a changeover of the production from dyed plastic granulate (G₁) to undyed plastic granulate (G₂) is disposed downstream of the first separator installation (24).

10. The device as claimed in claim 9, **characterized in that**
at least one first storage container (B₁₁, B₁₂, B₁₃) for storing dyed plastic granulate (G₁), and at least one second storage container (B₃₁, B₃₂, B₃₃) for storing impure plastic granulate (G₃) are disposed downstream of the color granulate changeover unit (47).

11. The device as claimed in claim 10, **characterized in that**
a return feed line (57) for returning impure plastic granulate (G₃₁, G₃₃) in the production of dyed plastic granulate (G₁) is disposed from the at least one second storage container (B₃₁, B₃₃) to the multi-shaft screw extruder (2).

12. The device as claimed in claim 10 or 11, **characterized in that**
a classification installation (56) for classifying the impure plastic granulate (G₃) is disposed between the color granulate changeover unit (47) and a plurality of second storage containers (B₃₁, B₃₂, B₃₃).

13. The device as claimed in one of claims 1 to 12, **characterized in that**
the multi-shaft screw extruder (2) for feeding undyed plastic material (M) comprises a first infeed opening (14), and for feeding dyeing agent (F) and/or impure plastic granulate (G₃₁, G₃₃) comprises a second infeed opening (15).

14. The device as claimed in one of claims 1 to 13, **characterized in that**
the multi-shaft screw extruder (2) comprises a housing (4) having at least two mutually penetrating housing bores (5, 6) that are configured therein;
**in that** associated treatment element shafts (7, 8) are disposed so as to be rotatingly drivable in the at least two housing bores (5, 6), said treatment element shafts (7, 8) being configured so as to mutually mesh in a tight manner and so as to scrape an internal wall (13) of the housing (4).

15. A method for producing plastic granulate, comprising the following method steps:
- providing a device (1) for producing plastic granulate (G₁, G₂, G₃), as claimed in at least one of claims 1 to 14;
- producing dyed plastic granulate (G₁) by means of the multi-shaft screw extruder (2) and the underwater pelletizing installation (3), and separating the dyed plastic granulate (G₁) by means of the first separator installation (24);
- changing over the granulate changeover unit (20);
- producing undyed plastic granulate (G₂) by means of the multi-shaft screw extruder (2) and the underwater pelletizing installation (3), and separating the undyed plastic granulate (G₂) by means of the second separator installation (29).

16. The method as claimed in claim 15, **characterized in that**
the granulate changeover unit (20) is converted after a start of the production of the undyed plastic granulate (G₂), and impure plastic granulate (G₃) that is created up to the conversion of the granulate changeover unit (20) is separated by means of the first separator installation (24) and of a downstream color granulate changeover unit (47).

17. The method as claimed in claim 16, **characterized in that**
the impure plastic granulate (G₃₁, G₃₃) in a subsequent production of dyed plastic granulate (G₁) is at least in part fed to the multi-shaft screw extruder (2).

18. The method as claimed in one of claims 15 to 17, **characterized in that**
a pelletizing water changeover unit (34) is converted.

19. The method as claimed in one of claims 15 to 18, **characterized in that**
pelletizing water (W₁, W₂) from at least one of the separator installations (24, 29), prior to being fed to the underwater pelletizing installation (3), is filtered by means of at least one filter installation (62).

## Revendications

1. Dispositif de fabrication d'un granulat de matière plastique avec
- une machine à vis sans fin à arbres multiples (2) pour fournir une matière fondue de matière plastique (S),
- un système de granulation submersible (3) pour la fabrication de granulat de matière plastique (G₁, G₂, G₃) se trouvant dans l'eau de granulation (W₁, W₂) à partir de la matière fondue de matière plastique (S),
**caractérisé par**
- une unité de changement de granulat (20) disposée en aval du système de granulation submersible (3) dans une direction de convoyage (19) pour séparer du granulat de matière plastique coloré (G₁) et du granulat de matière plastique non coloré (G₂) et pour séparer un traitement ultérieur dans un premier circuit de traitement ultérieur pour le granulat de matière plastique coloré (G₁) et un deuxième circuit de traitement ultérieur pour le granulat de matière plastique non coloré (G₂),
- un premier système de séparation (24) disposé en aval de l'unité de changement de granulat (20) dans la direction de convoyage (19) pour séparer le granulat de matière plastique coloré (G₁) de l'eau de granulation (W₁), qui fait partie du premier circuit de traitement ultérieur, et
- un deuxième système de séparation (29), disposé en aval de l'unité de changement de granulat (20) dans la direction de convoyage (19), pour séparer le granulat de matière plastique non coloré (G₂) de l'eau de granulation (W₂), qui fait partie d'un circuit de traitement ultérieur et est disposé de manière parallèle par rapport au premier système de séparation (24).

2. Dispositif selon la revendication 1, **caractérisé en ce**
**qu'**est disposée, entre les systèmes de séparation (24, 29) et le système de granulation submersible (3), une unité de changement d'eau de granulation (34) pour amener de l'eau de granulation (W₁, W₂) hors du premier système de séparation (24) ou du deuxième système de séparation (29) vers le système de granulation submersible (3).

3. Dispositif selon la revendication 2, **caractérisé en ce**
**qu'**est disposé, entre le premier système de séparation (24) et l'unité de changement d'eau de granulation (34), un premier contenant d'eau de granulation (26) et qu'est disposé, entre le deuxième système de séparation (29) et l'unité de changement d'eau de granulation (34), un deuxième contenant d'eau de granulation (31).

4. Dispositif selon la revendication 2 ou 3, **caractérisé en ce qu'**est disposée entre le premier système de séparation (24) et l'unité de changement d'eau de granulation (34) une première pompe d'eau de granulation (28) et est disposée entre le deuxième système de séparation (29) et l'unité de changement d'eau de granulation (34) une deuxième pompe d'eau de granulation (33).

5. Dispositif selon la revendication 1, **caractérisé en ce**
**qu'**est disposé entre les systèmes de séparation (24, 29) et le système de granulation submersible (3) un contenant d'eau de granulation (26) pour amener de l'eau de granulation (W₁, W₂) hors des systèmes de séparation (24, 29).

6. Dispositif selon la revendication 1 ou 5, **caractérisé en ce qu'**est disposée entre les systèmes de séparation (24, 29), en particulier entre le contenant d'eau de granulation (26) et le système de granulation submersible (3) une pompe à eau de granulation (28).

7. Dispositif selon l'une quelconque des revendications 1 à 6, **caractérisé en ce**
**qu'**est disposé entre au moins un des systèmes de séparation (24, 29), en particulier entre le contenant d'eau de granulation (26), et le système de granulation submersible (3) au moins un système filtrant (62).

8. Dispositif selon la revendication 7, **caractérisé en ce**
**que** le système filtrant (62) comprend au moins deux filtres d'eau de granulation (63, 64), qui sont disposés de manière parallèle l'un par rapport à l'autre.

9. Dispositif selon l'une quelconque des revendications 1 à 8, **caractérisé en ce**
**qu'**est disposée en aval du premier système de séparation (24) une unité de changement de granulat coloré (47) pour séparer le granulat de matière plastique coloré (G₁) et un granulat de matière plastique impur (G₃) lors de la reconfiguration de la fabrication du granulat de matière plastique coloré (G₁) à un granulat de matière plastique non coloré (G₂).

10. Dispositif selon la revendication 9, **caractérisé en ce**
**que** sont disposés en aval de l'unité de changement de granulat coloré (47) au moins un premier contenant de stockage (B₁₁, B₁₂, B₁₃) pour stocker du granulat de matière plastique coloré (G₁) et au moins un deuxième contenant de stockage (B₃₁, B₃₂, B₃₃) pour stocker du granulat de matière plastique impur (G₃).

11. Dispositif selon la revendication 10, **caractérisé en ce**
**qu'**est disposé pour ramener du granulat de matière plastique impur (G₃₁, G₃₃) lors de la fabrication de granulat de matière plastique coloré (G₁) un conduit de retour (57) depuis l'au moins un deuxième contenant de stockage (B₃₁, B₃₃) vers la machine à vis sans fin à arbres multiples (2).

12. Dispositif selon la revendication 10 ou 11, **caractérisé en ce qu'**est disposé entre l'unité de changement de granulat coloré (47) et plusieurs deuxièmes contenants de stockage (B₃₁, B₃₂, B₃₃), un système de classification (56) pour classer le granulat de matière plastique impur (G₃).

13. Dispositif selon l'une quelconque des revendications 1 à 12, **caractérisé en ce**
**que** la machine à vis sans fin à arbres multiples (2) comprend une première ouverture d'amenée (14) pour l'amenée de matériau de matière plastique non coloré (M) et une deuxième ouverture d'amenée (15) pour l'amenée d'agent colorant (F) et/ou de granulat de matière plastique impur (G₃₁, G₃₃).

14. Dispositif selon l'une quelconque des revendications 1 à 13, **caractérisé en ce**
**que** la machine à vis sans fin à arbres multiples (2) comprend un boîtier (4) avec au moins deux alésages de boîtier (5, 6) réalisés dans celui-ci et traversants,
**que** sont disposés de manière à pouvoir être entraînés en rotation dans les au moins deux alésages de boîtier (5, 6) des arbres d'élément de traitement (7, 8) associés, qui sont réalisés de manière à s'engager l'un avec l'autre de manière étanche et de manière à retirer une paroi intérieure (13) du boîtier (4).

15. Procédé de fabrication de granulat de matière plastique comprenant les étapes :
- de fourniture d'un dispositif (1) pour la fabrication de granulat de matière plastique (G₁, G₂, G₃) selon au moins l'une quelconque des revendications 1 à 14,
- de fabrication d'un granulat de matière plastique coloré (G₁) au moyen de la machine à vis sans fil à arbres multiples (2) et du système de granulation submersible (3) et de séparation du granulat de matière plastique coloré (G₁) au moyen du premier système de séparation (24),
- la reconfiguration de l'unité de changement de granulat (20),
- la fabrication de granulat de matière plastique non coloré (G₂) au moyen de la machine à vis sans fin à arbres multiples (2) et du système de granulation submersible (3) et la séparation du granulat de matière plastique non coloré (G₂) au moyen du deuxième système de séparation (29).

16. Procédé selon la revendication 15, **caractérisé en ce**
**que** l'unité de changement de granulat (20) est reconfigurée après un début de la fabrication du granulat de matière plastique non coloré (G₂) et du granulat de matière plastique impur (G₃) se formant jusqu'à la reconfiguration de l'unité de changement de granulat (20) est séparé au moyen du premier système de séparation (24) et d'une unité de changement de granulat coloré (47) disposée en aval.

17. Procédé selon la revendication 16, **caractérisé en ce**
**que** le granulat de matière plastique impur (G₃₁, G₃₃) est amené au moins en partie à la machine à vis sans fin à arbres multiples (2) lors d'une fabrication qui suit de granulat de matière plastique coloré (G₁).

18. Procédé selon l'une quelconque des revendications 15 à 17, **caractérisé en ce**
**qu'**une unité de changement d'eau de granulation (34) est reconfigurée.

19. Procédé selon l'une quelconque des revendications 15 à 18, **caractérisé en ce**
**que** l'eau de granulation (W₁, W₂) est filtrée à partir d'au moins un des systèmes de séparation (24, 29) avant l'amenée au système de granulation submersible (3) au moyen d'au moins un système filtrant (62).
